Europäisches Patentamt

European Patent Office

Office européen des brevets

(19)

(11) Veröffentlichungsnummer: **0 204 031**
**B1**

(12) **EUROPÄISCHE PATENTSCHRIFT**

(45) Veröffentlichungstag der Patentschrift:
22.03.89

(21) Anmeldenummer: **85115452.6**

(22) Anmeldetag: **05.12.85**

(51) Int. Cl.⁴: **F 16 K 27/04,** F 16 K 31/122,
F 16 K 11/07

(54) **Mehrwegventil.**

(30) Priorität: **04.01.85 DE 3500128**

(43) Veröffentlichungstag der Anmeldung:
**10.12.86 Patentblatt 86/50**

(45) Bekanntmachung des Hinweises auf die Patenterteilung:
**22.03.89 Patentblatt 89/12**

(84) Benannte Vertragsstaaten:
**CH DE FR GB IT LI**

(56) Entgegenhaltungen:
**CH-A- 555 500**

(73) Patentinhaber: **ROBERT BOSCH GMBH, Postfach 50,
D-7000 Stuttgart 1 (DE)**

(72) Erfinder: **Mayer, Günter, Mittleres Gässle 13,
D-7141 Murr (DE)**
Erfinder: **Steiner, Josef, Hermann-Essig-Strasse 104,
D-7141 Schwieberdingen (DE)**

## Beschreibung

*Stand der Technik*

Die Erfindung geht aus von einem Wegeventil nach der Gattung des Hauptanspruchs. Bei einem aus der DE-OS 2 300 644 bekannten Wegeventil sind die Gehäusedeckel mit Hilfe von Schrauben an einer Anschlußplatte befestigt. Dabei müssen die Bohrungen für die Schrauben und die Befestigungsbohrungen in der Anschlußplatte möglichst genau fluchten. Sie müssen somit beide mit kleinen Toleranzen hergestellt sein. Ferner ist zusätzlicher Bauraum notwendig.

*Vorteile der Erfindung*

Das erfindungsgemäße Wegeventil mit den kennzeichnenden Merkmalen des Hauptanspruchs hat demgegenüber den Vorteil, daß das Wegeventil kurz und kompakt baut. Die Buchsen zentrieren und befestigen die Gehäusedeckel im Gehäuse des Wegeventils. Mit Hilfe des Dichtrings ist der Gehäusedeckel im Gehäuse fixiert und erleichtert dadurch die Montage. Ferner dichtet dieser Dichtring zwei Übergänge zugleich ab.

Durch die in den Unteransprüchen aufgeführten Maßnahmen sind vorteilhafte Weiterbildungen und Verbesserungen der im Hauptanspruch angegebenen Merkmale möglich.

*Zeichnung*

Ein Ausführungsbeispiel der Erfindung ist in der Zeichnung dargestellt und in der nachfolgenden Beschreibung näher erläutert. Es zeigen:

Fig. 1 ein Wegeventil in Draufsicht,
Fig. 2 einen Längsschnitt in Richtung II-II nach Figur 1 und
Fig. 3 einen Schnitt in Richtung III-III nach Figur 2.

*Beschreibung des Ausführungsbeispiels*

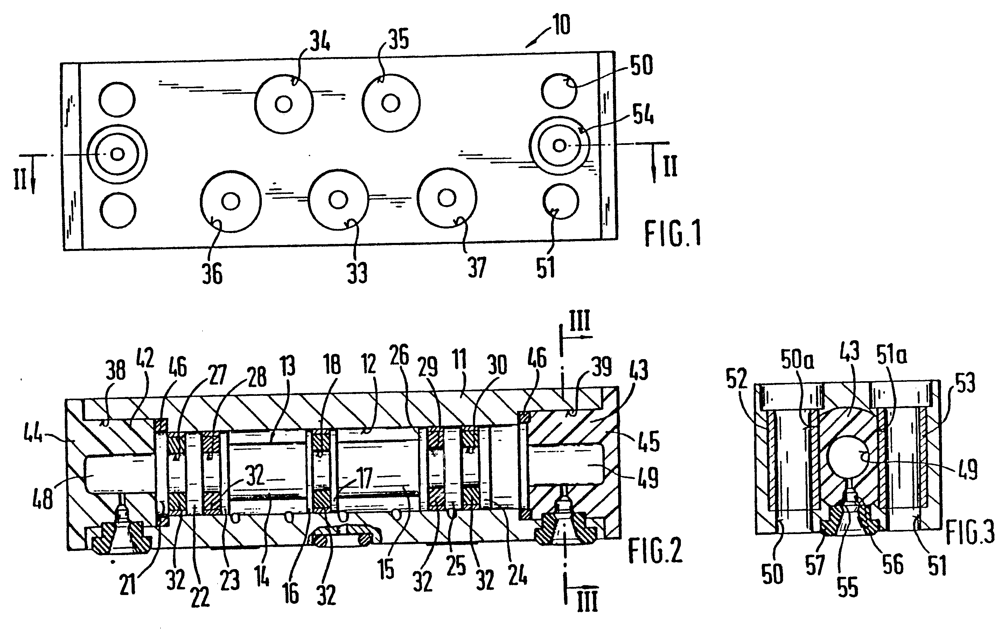

Das Wegeventil 10, das als Druckluftventil eingesetzt wird, hat ein Schiebergehäuse 11 mit darin ausgebildeter Schieberbohrung 12, in der ein Steuerschieber 13 gleitend geführt ist. Der Steuerschieber 13 weist zwei Abschnitte 14, 15 auf, die durch zwei schmale Stege 16, 17, zwischen denen sich eine Ringnut 18 befindet, getrennt sind. Ferner sind an den beiden Enden des Steuerschiebers 13 jeweils drei Stege 21, 22, 23 bzw. 24, 25, 26 angeordnet, zwischen denen sich jeweils zwei Ringnuten 27, 28 bzw. 29, 30 befinden. In jeder der Ringnuten 18, 27 bis 30 ist ein Dichtring 32 angeordnet. An der Oberseite des Schiebergehäuses 11 sind — wie in Figur 1 näher dargestellt — ein Zulaufanschluß 33, zwei Verbraucheranschlüsse 34, 35 und zwei Entlüfteranschlüsse 36, 37 ausgebildet.

Die Schieberbohrung 12 hat an ihren beiden Enden jeweils eine zylindrische Erweiterung 38 bzw. 39. In diese greift jeweils ein im Durchmesser abgestimmter, zylindrischer Fortsatz 42 bzw. 43 eines die Schieberbohrung 12 an den Stirnseiten des Schiebergehäuses 11 verschließenden Deckels 44 bzw. 45 ein. An beiden Fortsätzen 42, 43 ist an einer etwa 45°-Phase ein Dichtring 46 angeordnet, der die Schieberbohrung 12 nach außen hin abdichtet und gleichzeitig den Deckel 44 bzw. 45 nach außen drückt. Der jeweilige Innenraum 48 bzw. 49 der beiden Fortsätze 42 bzw. 43 dient als Steuerraum für den Steuerschieber 13 oder bei mechanischer Rückstellung des Steuerschiebers 13 als Einbauraum für eine Rückstellfeder.

Da beide Deckel 44, 45 gleich ausgebildet sind, ist hier nur der Deckel 45 und seine Befestigung im Schiebergehäuse 11 näher beschrieben. Im Bereich der Erweiterung 39 sind im Schiebergehäuse 11 und im Deckel 45 zwei senkrecht zur Schieberbohrung 12 verlaufende, durchgehende, abgesetzte Bohrungen 50, 51 ausgebildet, die die Erweiterung 39 tangierend schneiden. Es ist dadurch auch im Fortsatz 43 des Deckels 45 je eine Ausnehmung 50a bzw. 51a entstanden, die in Verbindung mit der jeweiligen Bohrung 50 bzw. 51 steht. In den Bohrungen 50, 51 und in den Ausnehmungen 50a bzw. 51a ist je eine zylindrische Buchse 52, 53 eingesetzt. Diese Buchsen 52, 53 zentrieren und befestigen den Deckel 45 in der Erweiterung 39 des Schiebergehäuses 11. Durch die Bohrungen 50, 51 sind nicht dargestellte Langschaftschrauben einführbar, um das Schiebergehäuse 11 auf einer nicht dargestellten Anschlußplatte zu befestigen.

Ferner ist in derselben Ebene zwischen den beiden Bohrungen 50, 51 eine dritte, abgesetzte Bohrung 54 ausgebildet, die als Zuführung für das Steuermedium des Steuerschiebers 13 dient. Die Bohrung 54 steht in Verbindung mit einer Ausnehmung 55 und einer abgesetzten Bohrung 56 im Fortsatz 43 des Deckels 45. Die Bohrung 56 mündet in den Innenraum 49 des Fortsatzes 43. In der Bohrung 54 ist ein an deren Innenwandung anliegender Dichtring 57 angeordnet. Dieser ragt etwas über das Schiebergehäuse 11 hinaus, so daß die Verbindung zwischen dem Schiebergehäuse 11 und der Anschlußplatte im Bereich der Bohrung 54 abgedichtet ist. Ferner ragt der Dichtring 57 in die Ausnehmung 55 hinein und dichtet somit die Verbindung zwischen dem Schiebergehäuse 11 und dem Fortsatz 43 ab. Die Innenwand des Dichtrings 57 ist von der Anschlußplatte zum Fortsatz 43 hin leicht konisch ausgebildet. Die Enden des Dichtrings 57 sind jeweils leicht abgerundet.

Bei der Montage des Deckels 45 im Schiebergehäuse 11 wird der Deckel 45 mit seinem Fortsatz 43 in die Erweiterung 39 eingeschoben und mit leichtem Druck hingedrückt. Die beiden Buchsen 52, 53 können nun in die Bohrungen 50, 51 eingeschoben werden. Dabei greifen die Buchsen 52, 53 auch in die Ausnehmungen 50a, 51a ein. Der Deckel 45 ist nun mit seinem Fortsatz 43 im Schiebergehäuse 11 zentriert und bereits befestigt. Da die Buchsen 52, 53 durch den Dichtring 46 leicht vorgespannt sind, können sie nicht herausfallen und dienen somit bereits als Sicherung. Der Fortsatz 43 ist dadurch in der Erweiterung 39 festgeklemmt. Die Buchsen sind jederzeit aus den Bohrungen 50, 51 entfernbar, so daß eine leichte Demontage möglich ist. Anschließend wird der Dichtring 57 in die Bohrung 54 und in die Ausnehmung 55 des Deckels 45 eingesetzt. Durch den bereits fixierten Deckel 45 ist der Dichtring 57 leicht einbaubar. Ferner können mit Hilfe des elastischen Dichtrings 57 Toleranzunterschiede zwischen der Bohrung 54 und der Ausnehmung 55 bzw. der Bohrung 56 ausgeglichen werden. Der Dichtring 57 dichtet dabei gleichzeitig zwei Übergänge ab. Es ist eine einfache Vormontage möglich, die eine ebenso einfache und schnelle Endmontage beim Abnehmer erlaubt. Es sind keine zusätzlichen Transportsicherungen nötig.

Die Funktion des Wegeventils 10 ist hinreichend bekannt und deshalb hier nicht näher beschrieben.

## Patentansprüche

1. Wegeventil (10), insbesondere für Druckluftbetrieb, mit einem Schiebergehäuse (11), in dessen Schieberbohrung (12) ein Steuerschieber (13) gleitend geführt ist und deren Stirnseite mit Gehäusedeckeln (44, 45) verschließbar sind, die einen in das Schiebergehäuse (11) ragenden Fortsatz (42, 43) aufweisen, in deren jedem eine Zuführung (54, 56) für das Steuermedium des Steuerschiebers (13) ausgebildet ist, dadurch gekennzeichnet, daß im Bereich der Fortsätze (42, 43) im Schiebergehäuse (11) sich etwa quer zur Schieberbohrung (12) verlaufende, durchgehende und die Fortsätze (42, 43) der Gehäusedeckel (44, 45) außermittig, etwa tangential schneidende Bohrungen (50, 51) befinden, durch die an den Fortsätzen (42, 43) Ausnehmungen (50a, 51a) gebildet sind, die mit den Bohrungen (50, 51) in Verbindung stehen, und daß in den Bohrungen (50, 51) Buchsen (52, 53) angeordnet sind, die in die Ausnehmungen (50a, 51a) der Fortsätze (42, 43) eingreifen und die dadurch die Gehäusedeckel (44, 45) im Schiebergehäuse (11) zentrieren und befestigen.

2. Wegeventil nach Anspruch 1, dadurch gekennzeichnet, daß die Zuführung (56) für das Steuermedium des Steuerschiebers (13) im Bereich der Fortsätze (42, 43) der Gehäusedeckel (44, 45) angeordnet ist, und daß in dieser Bohrung (56) ein Dichtmittel (57) angeordnet ist, daß die Verbindung zwischen Schiebergehäuse (11) und einer Anschlußplatte und zugleich die Verbindung zwischen dem Schiebergehäuse (11) und den Fortsätzen (42, 43) der Gehäusedeckel (44, 45) abdichtet.

3. Wegeventil nach Anspruch 1 und/oder 2, dadurch gekennzeichnet, daß im Bereich der Zuführung (56) für das Steuermedium (42, 43) eine Ausnehmung (55) angeordnet ist und daß in diese Ausnehmung (55) das Dichtmittel (57) eingreift.

4. Wegeventil nach einem der Ansprüche 1 bis 3, dadurch gekennzeichnet, daß die Zuführung (56) für das Steuermedium zwischen den Bohrungen (50, 51) für die Buchsen (52, 53) und in derselben Ebene wie diese angeordnet ist.

5. Wegeventil nach einem der Ansprüche 1 bis 4, dadurch gekennzeichnet, daß die Buchsen (52, 53) die Fortsätze (42, 43) mit Vorspannung festhalten.

6. Wegeventil nach einem der Ansprüche 1 bis 5, dadurch gekennzeichnet, daß das Dichtmittel ein Dichtring (57) ist.

7. Wegeventil nach einem der Ansprüche 1 bis 6, dadurch gekennzeichnet, daß der Dichtring (57) eine konisch verlaufende Innenwandung hat.

8. Wegeventil nach einem der Ansprüche 1 bis 7, dadurch gekennzeichnet, daß an der Stirnseite der Fortsätze (42, 43) ein Freistich ausgebildet ist, in den ein die Schieberbohrung (12) des Steuerschiebers (13) nach außen abdichtendes Dichtmittel (46) angeordnet ist.

## Claims

1. Multiple-way valve (10), in particular for compressed air operation, with a slide valve housing (11), in the slide valve bore (12) of which a control slide valve (13) is slidingly guided and the end face of which bore can be closed by housing covers (44, 45), which have a continuation (42, 43) projecting into the slide valve housing (11), in each of which there is a feed (54, 56) for the control medium of the control slide valve (13), characterized in that there are in the region of the continuations (42, 43) in the slide valve housing (11) continuous bores (50, 51) running approximately transversely to the slide valve bore (12) and intersecting the continuations (42, 43) of the housing covers (44, 45) off-centre, approximately tangentially, by which bores the clearances (50a, 51a) which are in connection with the bores (50, 51) are formed on the continuations (42, 43), and in that in the bores (50, 51) there are arranged bushes (52, 53), which engage in the clearances (50a, 51a) of the continuations (42, 43) and which, as a result, centre and fasten the housing covers (44, 45) in the slide valve housing (11).

2. Multiple-way valve according to Claim 1, characterized in that the feed (56) for the control medium of the control slide valve (13) is arranged in the region of the continuations (42, 43) of the housing covers (44, 45), and in that in this bore (56) there is arranged a sealing means (57), which seals off the connection between slide valve housing (11) and a connection plate and at the same time the connection between the slide valve housing (11) and the continuations (42, 43) of the housing covers (44, 45).

3. Multiple-way valve according to Claim 1 and/or 2, characterized in that a clearance (55) is arranged in the continuations (42, 43) in the region of the feed (56) for the control medium and in that the sealing means (57) engages in this clearance (55).

4. Multiple-way valve according to one of Claims 1 to 3, characterized in that the feed (56) for the control medium is arranged betweeen the bores (50, 51) for the bushes (52, 53) and in the same plane as the latter.

5. Multiple-way valve according to one of Claims 1 to 4, characterized in that the bushes (52, 53) hold the continuations (42, 43) secure with pretension.

6. Multiple-way valve according to one of Claims 1 to 5, characterized in that the sealing means is a sealing ring (57).

7. Multiple-way valve according to one of Claims 1 to 6, characterized in that the sealing ring (57) has a conically running inside wall.

8. Multiple-way valve according to one of Claims 1 to 7, characterized in that on the end face of the continuations (42, 43) there is an undercut, into which a sealing means (46) is arranged, sealing off the slide valve bore (12) of the control slide valve (13) from the outside.

**Revendications**

1. Soupape à voies (10), notamment pour fonctionnement à l'air comprimé, avec un carter de tiroir (11), dans l'alésage de tiroir (12) duquel un tiroir de commande (13) est guidé, de manière à pouvoir glisser, et dont les côtés frontaux sont susceptibles d'être obturés par des couvercles de carter (44, 45), qui présentent un appendice (42, 43) émergeant dans le carter de tiroir (11), appendice dans lequel est réalisé, pour chacun, une amenée (54, 56) pour le fluide de commande du tiroir de commande (13), caractérisé en ce qu'il y a des alésages (50, 51) traversants, se développant dans le carter de tiroir (11), dans la zone des appendices (42, 43), à peu près transversalement, par rapport à l'alésage de tiroir (12) et coupant les appendices (42, 43) du couvercle de carter (44, 45), de manière excentrique, à peu près tangentiellement, alésages à travers lesquels des évidements (50a, 51a) sont formés sur les appendices (42, 43), qui sont reliés aux alésages (50, 51), et en ce que des douilles (52, 53) sont disposées dans les alésages (50, 51), douilles qui sont en prise dans les évidements (50a, 51a) des appendices (42, 43) et centrent et fixent, de ce fait, les couvercles de carter (44, 45) dans le carter de tiroir (11).

2. Soupape de voies selon la revendication 1, caractérisé en ce que l'amenée (56) du fluide de commande du tiroir de commande (13) est disposée dans la zone des appendices (42, 43) des couvercles de carter (44, 45), et en ce qu'un moyen d'étanchéité (57) est disposé dans cet alésage (56), moyen qui étanche la liaison située entre carter de tiroir (11) et une plaque de raccordement et, en même temps la liaison entre le carter de tiroir (11) et les appendices (42, 43) des couvercles de carter (44, 45).

3. Soupape à voies selon la revendication 1 et/ou 2, caractérisé en ce qu'un évidement (55) est disposé dans la zone de l'amenée (56) du fluide de commande, dans l'appendice (42, 43) et en ce que le moyen d'étanchéité (57) est en prise dans cet évidement (55).

4. Soupape à voies selon l'une des revendications 1 à 3, caractérisé en ce que l'anemée (56) de fluide de commande est située entre les alésages (50, 51) destinés aux douilles (52, 53) et est disposée dans le même plan que ceux-ci.

5. Soupape à voies selon l'une des revendications 1 à 4, caractérisé en ce que les douilles (52, 53) immobilisent les appendices (42, 43), avec une précontrainte.

6. Soupape à voies selon l'une des revendications 1 à 5, caractérisé en ce que le moyen d'étanchéité est une bague d'étanchéité (57).

7. Soupape à voies selon l'une des revendications 1 à 6, caractérisé en ce que la bague d'étanchéité (57) possède une paroi interne se développant de manière conique.

8. Soupape à voies selon l'une des revendications 1 à 7, caractérisé en ce qu'un dégagement par rainure est réalisé sur le côté frontal des appendices (42, 43), dans lequel est disposé un moyen d'étanchéité (46) étanchant vers l'extérieur l'alésage de tiroir (12) du tiroir de commande (13).

FIG.1

FIG.2

FIG.3